Europäisches Patentamt

(19) European Patent Office

Office européen des brevets

(11) Publication number: **0 051 094**

**A1**

(12) **EUROPEAN PATENT APPLICATION**

(21) Application number: **80303905.6**

(22) Date of filing: **03.11.80**

(51) Int. Cl.³: **G 01 F 11/04**

(43) Date of publication of application:
**12.05.82 Bulletin 82/19**

(84) Designated Contracting States:
**AT BE CH DE FR GB IT LI LU NL SE**

(71) Applicant: **GRUNDY (TEDDINGTON) LIMITED**
**Somerset Road**
**Teddington Middlesex TW11 8TD(GB)**

(72) Inventor: **Glover, Brian Howard**
**35 Alder Close Ash Vale**
**Aldershot Hampshire(GB)**

(74) Representative: **King, James Bertram**
**Kings Patent Agency Limited 146a Queen Victoria Street**
**London EC4V 5AT(GB)**

(54) **Apparatus for metering liquids.**

(57) A beverage dispensing system for discharging a measured quantity of liquid at each operation from outlet 6 uses a tube 3 to contain a specified volume of liquid with valve means A, B located in a manifold block 5 controlling the direction of flow through the tube 3 by selectively connecting inlet 4 to one (A') or other (B') end of tube 3 and outlet 6 to the other (B') or the one (A') end of the tube. The tube houses a piston 11 comprising a plastic ball which cooperates with a seating at each end of the tube to form a valve. The position of the piston being sensed by photoelectric means 12, 13 which effects change over of the valve means A, B. The dispensing operation is commenced by switch 9 which causes a dispense point valve 10 to open with appropriate operation of valves A and B to cause liquid in tube 3 to be dispensed until the piston 11 reaches the seating at the other end of the tube. The next operation causes liquid to be discharged in the opposite direction along the tube 3.

FIG. 1

**EP 0 051 094 A1**

Croydon Printing Company Ltd.

TITLE

Apparatus for metering liquids.

This invention concerns an improved metering
system for dispensing metered quantities of liquid
accurately and rapidly.

The invention is primarily concerned with the
dispensing of beverages such as beers from bulk
pressurised casks, and according to a preferred arrangement the invention provides an apparatus using a conventional beer or the like cooler means which also
accommodates the metering system.

In GB 1228776 there is described a metering system
using a length of tubing housing a piston which moves
from one end of the tubing to the other during which
the volume of beverage in the tube is discharged. The
next dispensing operation reverses the flow thereby
causing the piston to travel along the tube in the
opposite direction to dispense another quantity. This
arrangement relies on the piston forming a valve to stop
flow and uses a mechanical change-over valve system
requiring the metering unit to be located at the
dispensing point. A further disadvantage of this unit
is the mechanical interlock which is used to prevent
short measure and the difficulty of ensuring hygenic
cleaning.

In GB 1250451 a further arrangement is disclosed

-2-

using electrically operated valves with a piston operatively associated with proximity detectors. The pistons do not themselves form valve means and inaccuracy can result from the metal proximity sensors used.

An object of this invention is to provide a metering system which is easily fitted to existing installations and which has good accuracy without being subject to mechanical wear during prolonged periods of use.

A further object is to provide a system which may be readily cleaned and which is simple and reliable in operation.

According to this invention there is provided a liquid metering apparatus for liquid under pressure said apparatus comprising a coiled tube having its ends secured adjacently in a manifold, a piston element within the tube, seatings for the piston at each end of the tube a liquid inlet pipe and a liquid outlet pipe connected to the manifold, photoelectric means for sensing the piston position when on the one or the other seating, valve means carried by the manifold with said valve means controlling passageways between the tube ends and the inlet and the outlet and being actuated by a manual control device, said control device also opening or closing a dispense point valve in the outlet pipe, the

-3-

valve means being arranged so that when said manual control is actuated with the piston on the one seating at one end of the tube the valve means connects the liquid inlet to the said one end of the tube and the other end of the tube to the liquid outlet whereby the volume of liquid in the tube is expelled, the liquid flow being cut-off by the valve means actuated by the photoelectric means when the piston reaches the seating at the other tube end, the next actuation of the manual control opening the dispense point outlet and actuating the valve means in a reverse direction of liquid flow so that the liquid inlet is connected to the other tube end and the outlet to the one said tube end whereby the piston is forced along the tube to expel the volume of liquid in the tube, the liquid flow being cut-off by the valve means actuated by the sensing means when the piston reaches the seating at the one end of the tube.

This system provides excellent accuracy by virtue of the photoelectric sensing means which is precise in operation and the piston, preferably being a plastics ball, forming a valve with the seating in addition to the valve means controlling flow direction and the dispense point valve. Test have shown that the quantity of dispensed liquid remains constant even after many operations. The arrangement also facilitates cleaning

-4-

and flushing of the piping.

In this arrangement a cooling system of generally conventional form may be used comprising a water bath having a refrigerating unit therein the water being agitated to maintain a substantially constant temperature which is thermostatically controlled. The coiled tube of a material having good heat conductivity is located within the bath so that liquid therein is maintained at desired temperature. This coiled tube, generally referred to as the "product tube" is used as the liquid measure, being of such bore and length that the internal volume between the seatings is of the required volume e.g. $\frac{1}{2}$ pint.

Preferably a fob trap is included between the manifold and dispense point, the fob trap comprising a chamber of capacity greater than the dispensed volume and a float operated switch means arranged to render the dispense control inoperative when the liquid level falls below a predetermined level. In an embodiment the dispense point has a manually operable switch and a solenoid dispense valve, the switch initiating dispensing of the liquid.

The sensing means comprises photoelectric device preferably arranged so that it is common to both ends of the tube.

-5-

The photoelectric means conveniently provides a signal to an electronic control circuit to effect the change over of the valve means after a dispense operation and when the piston or plunger engages one or other seating.

The apparatus conveniently includes a bistable circuit operative to connect the valve means in one or other directions of flow, a latch circuit operative through a dispense point switch to iniatiate the flow by opening the valve means, in the selected flow direction, the latch maintaining the valve means open until operation of the sensing means which effects closure of the valve means through the latch and changes the state of the bistable. Preferably the bistable circuit comprises a flip-flop controlling a relay which effects energising of the valve means, the latch comprising an operational amplifier arranged to be momentarily unbalanced by the dispense point switch and thereafter held unbalanced by the sensing means after the ball has left one or other seating, the balanced condition being restored when the ball again reaches a seating, to close the valve means.

A valve at the dispense point may be arranged to operate simultaneously with the valve means.

An embodiment according to the invention will now be described with reference to the accompanying drawings

-6-

wherein:-

Figure 1  shows schematically and in perspective an arrangement for a beer metering dispenser in conjunction with a cooling unit,

Figure 2  shows a modified arrangement of Figure 1, and

Figure 3  shows a schematic diagram of the electrical circuit serving to control and dispensing and metering process.

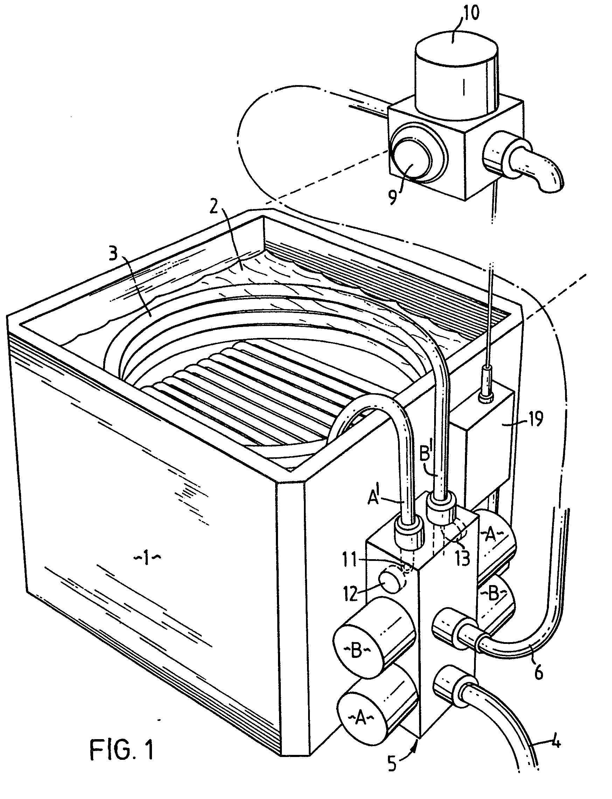

As shown in Figure 1 a bath 1 containing water 2 has a refrigerating unit therein, an agitator (not shown) also being provided. A coiled tube 3 of stainless steel is provided within the bath. This arrangement of forming a beer cooler is conventional.

A manifold block 5 of transparent plastic is mounted on the outside of the bath, and the ends of the coil 3 are brought out of the bath in parallel adjacent relation and each secured in a bore in the manifold block. A ball 11 of rubber or like material forms a piston element and is located in the coil and bores. The ball when at the one or the other end of the coil and in a bore, engages on a seating (not shown) valve fashion. A light-dependent resistor 12 or other photoelectric sensor is mounted on the manifold at one side and a light source 13 is mounted at the other side. The ball when on either seating interrupts the common light beam.

Solenoid actuated valves A,A, B,B, are provided, mounted on the manifold. Beer from a pressurised cask is led to the block via an inlet pipe 4, and an outlet pipe 6 connects to a manually actuated control located on a counter or the like. The solenoid valves are connected in pairs, each one inlet and one outlet valve so that those of each pair operate together. Appropriate bores or porting are provided in the manifold, so that alternate valve pair operation changes over the inlet and outlet with respect to the coil ends. The solenoids are operated by appropriate electronic control means 19 later described, the manual control consists of a press button 9 which operates a solenoid 10 connected to the electronic means.

In operation, assuming the ball is at the coil end $A^1$ on its seating, then on pressing the button 9 beer flows from the cask to the coil end $A^1$, the ball being moved along the coil piston fashion, the beer in the coil thus being forced out of the coil end $B^1$ and through the outlet pipe and a metered quantity of beer is dispensed between locations $A^1$ and $B^1$. When so dispensed the ball reaches the seating at end $B^1$ to close the outlet and the interruption of the beam results in change over for the next actuation, when a further operation of the press

-8-

button 9 results in beer flowing from the inlet to the coil end $B^1$ to force out the quantity in the tube between locations $B^1$ and $A^1$.

A pump may be included between the keg and manifold 5, and in addition a fob trap may be provided between the keg and pump.

The fob trap consists of a chamber having a volume considerably in excess of a half pint. The chamber has an outlet and inlet, both of which are positioned low down so as to be below beer level at all times. Beverage passes through the chamber and any fob which is in the system floats to the top of the chamber and results in a lowering of the beverage level. The chamber also houses a float switch which is connected in series with the dispense signal button in the bar. When the beverage level falls below its switching point, the button 9 becomes inoperative, thus preventing the meter from being operated when the beverage supply fails. Since the capacity of the chamber is larger than the half pint, the meter is able to finish dispensing a complete half pint without becoming unprimed.

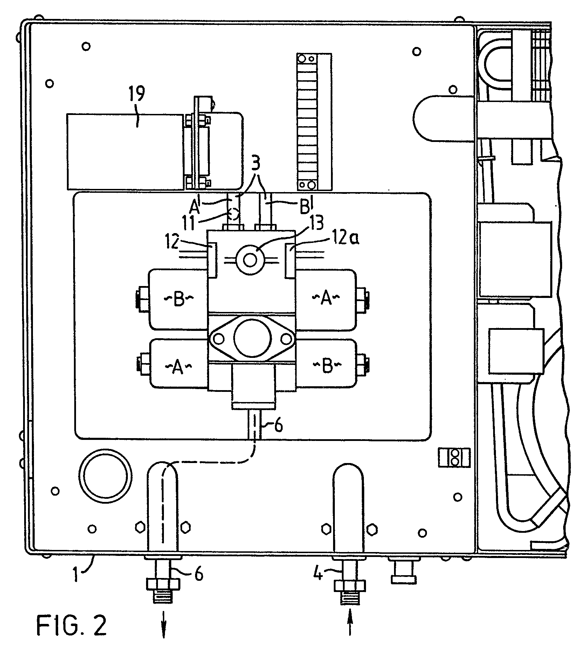

Figure 2 shows an arrangement which is generally similar to that shown in Figure 1 but the manifold block, valves, and associated components are mounted on lid of the water bath. In this arrangement, two light dependent resistors 12, 12a are employed, the light source 13 being located between them, the light being seen by both resistors.

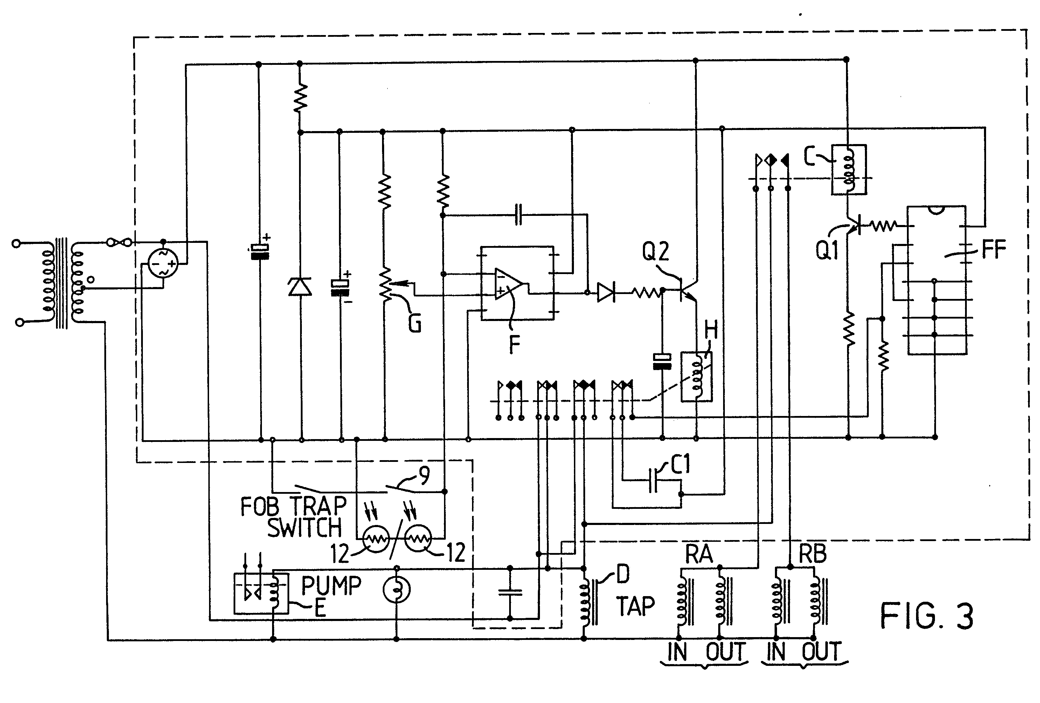

Referring to Figure 3, the manifold includes four solenoid operated valves which are connected in two pairs. Each pair comprises a valve controlling the inlet 4 and outlet 6. The first pair of valves RA cause the inlet 4 to be connected to the end $A^1$ of the coil 3 and the outlet 8 of the coil 3 to be connected to the outlet 6. The other pair of solenoids RB when energised cause the inlet 4 to be connected to the end $B^1$ of the coil 3, and for the end $A^1$ of the coil 3 to be connected to the outlet 6. Appropriate energisation of either pair of coils establishes the direction of flow of beverage through the coil 3 and hence to the outlet 8. One or other pairs of the solenoids RA or RB are placed into circuit through changeover contacts associated with a relay C which is driven through transistor Q1 from the output of a bi-stable flip-flop FF. Relay C contacts are energised together with operation of the tap solenoid D and the pump relay E.

The light dependent resistors are connected to one input of an operational amplifier F forming a latch and this is adjusted by a potentiometer G to establish the correct operating point. The output of the operational

-10-

amplifier F drives transistor Q2 which is connected with relay H. When the ball 11 lies in the path of the light, that is when it is on its seating at one or other ends of the coil, the relay H is not energised. The button 9 serves to momentarily unbalance the operational amplifier and causes relay H to be energised, thus allowing the tap solenoid D and one or other pairs of the solenoids RA or RB to be energised via relay C. The beverage is dispensed, and after the ball 11 lifts from its seating the light dependent resistors 12 are illuminated by the light source 13 and maintain the operational amplifier out of balance, thus holding relay H energised. When the ball 11 reaches the seating at the other end of the coil the light is interrupted and the operational amplifier de-energises relay H, thus shutting down the supply. At the same time capacitor C1 provides an impulse-like charge to be fed to the flip-flop which then changes state causing relay C to either energise or de-energise according to the previous position, and thus for the appropriate energising line to be connected to the other of the relay pairs RA or RB. The next actuation of the bar switch 9 will cause the appropriate pair or relays RA or RB to be energised and thus the beverage will flow in the opposite direction, terminating once again with the ball 11 interrupting the light to the light dependent resistor 12.  When the button 9 is again depressed capacitor C1 will have already provided a further pulse to the flip-flop upon earlier de-energisation of relay H and relay C is then effective to produce appropriate energisation of the correct relay pair RA or RB.

Should the flip-flop not be correctly synchronised with the direction of flow, then on operation of the button 9 the beverage will be caused to flow in a direction which forces the ball 11 onto the seating at the end of the coil, and no beverage will be dispensed. The next operation of the button 9 will synchronise the system and cause the appropriate relay pair RA or RB to be energised according to the position of the ball 11.

CLAIMS:

1.    A liquid metering apparatus for liquid under pressure said apparatus comprising a coiled tube, a movable piston or plunger element within the tube, a liquid inlet pipe and a liquid outlet pipe, means for sensing the piston when at one or other ends of the tubes, valve means controlling liquid feed between the tube ends and the inlet and outlet and being actuated by a control means, the valve means being arranged so that when the control means is actuated with the piston or plunger at the one end of the tube the valve means connects the liquid inlet to the said one end of the tube and the other end of the tube to the outlet whereby a measured volume of liquid in the tube is expelled through the outlet, the liquid flow being cutt-off by the valve means actuated by the sensing means when the piston reaches the other end of the tube, the next actuation of the control means actuating the valve means in a reverse direction of liquid flow so that the liquid inlet is connected to the other end of the tube end and the liquid outlet is connected to the one end of the tube whereby the piston is moved along the tube to expel the volume of liquid in the tube, the liquid flow being cut-off by the valve means actuated by the sensing means when the piston reaches the one end of the tube, characterised by a manifold block to which the ends of the tube and the inlet and outlet are connected, the manifold block housing the valve means, each end of the tube having a seating for the piston and forming a valve and the manifold including a photoelectric detector means having a beam to detect the piston when on the seating at one or other ends of the tube, the control means opening or closing a dispense outlet connected with the outlet pipe when actuated.

2. A liquid metering apparatus as claimed in Claim 1, wherein a fob trap is included between the manifold outlet and dispense point, the fob trap comprising a chamber of capacity greater than the dispensed volume of liquid and a float operated switch means arranged to render the dispense control inoperative when the liquid falls below a predetermined level.

3. A liquid metering apparatus as claimed in Claim 1 or 2, wherein the dispense point has a manually operable switch and a solenoid liquid dispense valve, the switch initiating dispensing of the liquid.

4. Liquid metering apparatus as claimed in any preceding claim, wherein the sensing means comprises photoelectric sensors associated with each end of the tube.

5. Liquid metering apparatus in accordance with Claim 4, wherein the ends of the tube are positioned

-3-

adjacently within the manifold block and have a common light source located therebetween with photoelectric detectors on the other side of each tube.

6. Liquid metering apparatus as claimed in Claim 4 or 5, wherein the photoelectric sensor provides a signal to an electronic control to effect the change-over of the valve means after a dispense operation and when the piston engages a seating.

7. Liquid metering apparatus as claimed in Claim 6, wherein the valve means comprise two pairs of solenoid-operated valves actuated by the electronic control to effect the change over of the direction of liquid flow through the tube.

8. Liquid metering apparatus as claimed in any one of the preceding claims for the dispensing of beverages from a pressurised bulk supply including a refrigerated water bath in which the greater part of the coiled tube is located, the manifold being mounted adjacent the water bath.

9. Liquid metering apparatus as claimed in Claim 6, wherein the manifold is secured to a wall or lid of the bath and the liquid outlet is connected to a remotely located dispense outlet which carries the manual control.

10. A liquid metering apparatus in accordance with any preceding claim, wherein the control means includes a

-4-

bistable circuit operative to connect the valve means
in one or other direction of flow, a latch circuit
operative through a dispense point switch to initiate
the flow by opening the valve means in the selected flow
direction, the latch maintaining the valve means open
until operation of the sensing means which effects closure
of the valve means through the latch and changes the state
of the bistable.

11. A liquid metering apparatus in accordance with
Claim 10, wherein the bistable circuit comprises a flip-
flop controlling a relay which effects the energising
of the valve means, the latch comprising an operational
amplifier arranged to be momentarily unbalanced by the
dispense point switch and thereafter held unbalanced by
the sensing means after thepiston has left one or other
seating, the balanced condition being restored when the
piston again reaches a seating, to close the valve means.

12. A liquid metering apparatus as claimed in Claim
10 or 11, wherein a dispense point valve is operated
simultaneously with operation of the valve means.

FIG. 1

FIG. 2

FIG. 3

3/3

00051094

European Patent
Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 1 228 776 (E.R. PAXMAN)<br>* Page 3, lines 6-14; figures * <br><br>-- | 1,3-6,<br>8,9 | G 01 F 11/04 |
| | DE - A - 2 708 684 (H. LINDEMAN)<br>* Figure *<br><br>-- | 7 | |
| | US - A - 4 213 544 (A.S. PANDOLFI)<br>* Column 2, line 50 - column 3, line 46; figures *<br><br>-- | 10,12 | TECHNICAL FIELDS SEARCHED (Int. Cl.³)<br><br>G 01 F 11/04<br>11/06 |
| | GB - A - 2 028 767 (C.S. CUMNER)<br>* Whole document *<br><br>---- | 3,7,<br>9,10,<br>12 | |

CATEGORY OF
CITED DOCUMENTS

X: particularly relevant
A: technological background
O: non-written disclosure
P: intermediate document
T: theory or principle underlying
    the invention
E: conflicting application
D: document cited in the
    application
L: citation for other reasons

&: member of the same patent
    family,
    corresponding document

| | | | |
|---|---|---|---|
| X | The present search report has been drawn up for all claims | | |
| Place of search | Date of completion of the search | Examiner | |
| The Hague | 08-07-1981 | NUYTEN | |

EPO Form 1503.1  06.78

EUROPÄISCHES PATENTAMT — EUROPEAN PATENT OFFICE — OFFICE EUROPEEN DES BREVETS

Zweigstelle in Den Haag — Branch at The Hague — Département à La Haye

Eingangsstelle — Receiving Section — Section de dépôt

P.B. 5818 Patentlaan, 2
2280 HV RIJSWIJK (ZH)
Pays-Bas / Netherlands / Niederlande
Telex 31651
(070) 90 67 89
BREVPATENT

0051094

Nach der Absendung des Recherchenberichts wurde(n) von der Recherchenabteilung das (die) folgende(n) Dokumente(n) ermittelt / After despatch of the search report the Search Division has discovered the following document(s) / Après expédition du rapport de recherche la Division de la Recherche a découvert le (les) document(s) indiqué(s) ci-après.

| EINSCHLAGIGE DOKUMENTE / DOCUMENTS CONSIDERED TO BE RELEVANT / DOCUMENTS CONSIDERES COMME PERTINENTS | | |
|---|---|---|
| Kategorie<br>Category<br>Catégorie | Kennzeichnung des Dokuments / Citation of document / Citation du document | betr. Anspruch<br>concerns claim<br>rev. concernée |
| E | GB - A - 1 591 881 (GRUNDY LTD)<br>* The whole patent * | 1-12 |

Diese(s) Dokument(e) wurde(n) dem Recherchenbericht, der veröffentlicht werden wird, hinzugefügt / This (These) document(s) has (have) been added to the search report, which will be published / Ce(s) document(s) est (sont) ajouté(s) au rapport de recherche qui sera publié.

EINGANGSSTELLE / RECEIVING SECTION / SECTION DE DEPOT

Anlage : Kopie des (der) Dokuments(e)
Annex : Copy of the document(s)
Annexe : Copie du (des) document(s)

EPA/EPO/OEB Form 1148 (10.80)